# EUROPEAN PATENT SPECIFICATION

(11) **EP 3 317 571 B1**
(45) Date of publication and mention of the grant of the patent: **01.01.2020**
(21) Application number: 16733593.4
(22) Date of filing: 30.06.2016
(51) Int. Cl.: F16L 13/04

(54) **A METHOD OF PRODUCING A TUBE ARRANGEMENT, A TUBE ARRANGEMENT AND A FURNACE PROVIDED WITH SUCH A TUBE ARRANGEMENT**
VERFAHREN ZUR HERSTELLUNG EINER ROHRANORDNUNG, ROHRANORDNUNG UND OFEN MIT SOLCH EINER ROHRANORDNUNG
PROCÉDÉ DE PRODUCTION D'UN AGENCEMENT DE TUBE, LEDIT AGENCEMENT ET FOUR ÉQUIPÉ D'UN CELUI-CI

(30) Priority: 01.07.2015 EP 15174795
(43) Date of publication of application: 09.05.2018
(73) Proprietor: Sandvik Intellectual Property AB, 811 81 Sandviken (SE)
(72) Inventor: BLOMFELDT, Thomas, 170 62 Solna (SE); HERNBLOM, Johan, 811 62 Sandviken (SE); NORDIN, Peter, 811 62 Sandviken (SE); WALLERÖ, Anders, 121 34 Enskededalen (SE)
(74) Representative: Sandvik
(86) International application number: PCT/EP2016/065421
(87) International publication number: WO 2017/001622

(56) References cited:
- GB-A- 496 293
- US-A- 1 935 041
- US-A- 1 975 495
- US-A- 3 248 134

## Description

### TECHNICAL FIELD

The present disclosure relates to a method of producing a tube arrangement, in which a first tube is joined with a second tube, both the first tube and the second tube being metal tubes.

The present disclosure also relates to a tube arrangement comprising a first metal tube provided with a first outer threading in an end region thereof, a second metal tube provided with a second outer threading in an end region thereof, a first butt weld joining said end regions of the first and second tubes, and a sleeve provided on the outside of first and second metal tubes forming a thread coupling with the outer threading of the first and second tubes.

The present disclosure also relates to a furnace comprising a chamber which is provided with a burner arrangement for generating heat. Said chamber is provided with a tube arrangement as defined hereinafter for conduction of a hot gas or steam through the furnace.

### BACKGROUND OF THE DISCLOSURE

Internal tube arrangements, such as for example coils, straight or partly bent tubes used for carrying out a process in an industrial furnace, may consist of separate tube lengths or sections joined together by welding. In order to obtain a reliable gas tight sealing functionality of the joints between separate tube sections, welds are often preferred instead of thread couplings as the means for connecting the tubes. As long as the tubes which have been joined by welding and the weld filler alloy used consist of the same or near the same alloys, there will be very limited diffusion (almost zero) of alloy elements across the weld from one tube section to the other tube section over time. However, there may be applications in which a first metal tube comprising a first metal alloy and a second tube comprising a second metal alloy are to be joined, in this case diffusion of alloy elements may occur and also at least one brittle phase may be formed in the weld or in either of the tube section areas directly adjacent to the weld. This will make the location where this brittle phase form less resistant against impact force and also mechanically weaker than a weld between alloys of the same or near same chemical composition. Thus, such welds and/or adjacent areas, may with time become a weak point in the tube arrangement and may optionally not be able to adopt the mechanical load designed to carry during use thereof.

An example of one such position in a steam cracker furnace is the outlet section of a steam-cracking furnace in which ethylene is produced by means of cracking of hydrocarbons conducted by said tube arrangement. At the outlet region of such a furnace, typically at the inside of the furnace chamber, a first tube of a ferritic FeCrAl alloy used for the tubing inside the furnace chamber may be connected to a second tube of an austenitic iron-nickel-chromium (FeNiCr) alloy used for further conduction of the steam or gas outside the furnace. When these materials are joined by means of welding, Al from the FeCrAl alloy will have a tendency to interact with the Ni from the FeCrNi alloy and form a nickel aluminide Ni₃Al, called γ', in the weld or in its near adjacent areas.

Furthermore, if the FeCrNi alloy would also contain a certain amount of nitrogen, aluminium nitride(AlN), which is a hard ,brittle and stable phase, may also appear in the weld or in its near adjacent areas. Accordingly, the weld between materials, such as FeCrAl alloys and FeCrNi alloys, may be substantially weakened due to the diffusion of elements between the joined tube sections and the resulting formation of such brittle phases within a certain time in service.

US 2008/0252074 discloses a coupling in which two tubes are joined by means of a weld and in which there is provided a metal sleeve overlapping the joint between the tubes and is in engagement with the respective tubes by means of a thread coupling. Accordingly, the opposed end regions of the tubes are provided with a respective outer threading, while the sleeve comprises two separated inner threads. Each of the inner threads is aimed for engagement with a respective outer threading of the respective tube. The coupling is achieved by first screwing the sleeve half way onto a first of the tubes, screw the second tube into the remaining half of the sleeve until its end meets the end of the first tube, and then weld the tubes together. This welding operation has to be made from inside the tubes by an internal bore welding. Internal bore welding is very complicated as it is difficult to locate the weld in the right position and to produce good weld from inside the tubes.

GB 496293 and US 1935041 disclose a coupling. However the coupling in these documents will not provide the necessary strength and stability to be useful. Additionally, the disclosed couplings will not provide for efficient gas tightness and load carrying properties simultaneously.

The two tubes may also be welded from the outside before the sleeve is positioned thereon by means of screwing. However, in such a case, any misalignment between the two tubes will make the positioning of the sleeve by means of screwing impossible.

Accordingly, it is an aspect of the present disclosure to present an alternative method of producing a tube arrangement. The present disclosure also relates to a tube arrangement as such enabling a less complicated coupling procedure.

### SUMMARY OF THE DISCLOSURE

The aspect of the disclosure is achieved by means of a method of producing a tube arrangement, in which a first tube is joined with a second tube, said tubes being metal tubes, wherein said method comprises the following steps:
a) providing an end region of the first metal tube with a first outer threading;
b) providing an end region of the second metal tube with an second outer threading;
c) providing a first sleeve part made of metal with a first inner threading;
d) providing a second metal sleeve part made of metal with a second inner threading;
e) positioning the first metal sleeve part on the first metal tube by screwing said first metal sleeve part onto the first outer threading of the first metal tube;
f) positioning the second metal sleeve part on the second metal tube by screwing the second metal sleeve part onto the second outer threading of the second metal tube;
g) moving the ends regions of the first and second metal tubes into contact with each other;
h) butt welding together from the outside the end regions of the first and second metal tubes;
i) bringing together the first and second metal sleeve parts by screwing at least one of said sleeve parts on the outer threading of its associated tube;
j) butt welding together from the outside the opposed ends of the first and second metal sleeve parts;
wherein in step g) the first and second metal sleeve parts are positioned such that
a joint between the first and second metal tubes is accessible from outside, wherein the first and second metal sleeve parts are separated from each other in the axial direction of the first and second metal tubes, thereby exposing between them, the joint between the first and the second metal tubes and making said joint accessible from the outside, and wherein before step a) or before step f), at least one of the first and second metal tubes is subjected to a treatment whereby said end region is provided with a larger outer diameter and a larger wall thickness than an adjacent part of the corresponding tube.

Thus, the present method as defined hereinabove or hereinafter will provide a reliable coupling of two metal tubes which are joined by means of butt welding wherein a sleeve bridges a weld between the metal tubes which forms a thread coupling with the two metal tubes and forms a load carrying member reducing the load to be carried by the weld between the metal tubes. In step g) the first and second metal sleeve parts are separated from each other in the axial direction of the first and second metal tubes, thereby exposing between them, the joint between the first and the second metal tubes and making said joint accessible from outside.

According to the invention as defined hereinabove or hereinafter, at least one of the first and second metal tubes before step a) or before step f), is subjected to a treatment whereby said end region is provided with a larger outer diameter and a larger wall thickness than an adjacent part of the corresponding tube. It may thereby be avoided that the threaded portion of the metal tube or metal tubes becomes mechanically weaker than the rest of the metal tube, which would otherwise be a result of the provision of a threading.

According to one embodiment of the method as defined hereinabove or hereinafter, the difference in outer diameter between the end region and the adjacent part of the metal tube provided with a larger diameter and a larger wall thickness than an adjacent part of that metal tube may not be larger than the depth of the threads. This means that the depth of the inner threading may not be less than the thickness of the tube wall, thus preventing a local tension concentration. Hence, at least a portion of the inner threading of the metal sleeve part or metal sleeve parts may be screwed beyond the end of the threading such that it overlaps said adjacent part of the metal tube and such that the opposite end of the metal sleeve part is removed and no longer overlaps the end of the metal tube, thereby exposing said end and facilitating welding thereof against the opposite end of the other metal tube.

According to one embodiment, both the first and the second metal tubes present the above-mentioned features.

According to one embodiment of the method as defined hereinabove or hereinafter, the treatment includes forging, such as upsetting, of said end region so that said end region is provided with a larger outer diameter and a larger wall thickness than an adjacent part of the corresponding metal tube.

According to one embodiment of the method as defined hereinabove or hereinafter, between step g) and h), a protection member is positioned between the first and second metal sleeve parts and the first and second metal tubes, wherein the protection member separates the second butt weld from the first and second metal tubes and from the first butt weld. Thereby, it is avoided that load which should be carried by the sleeve is carried by the first butt weld.

According to one embodiment of the method as defined hereinabove or hereinafter, the protection member may be a ceramic. The ceramic may have the shape of a tape, a ring or any other shape suitable for the task as a protection member preventing the weld connecting the sleeve parts from contacting and interacting with the tubes or the first butt weld.

According to one embodiment of the method as defined hereinabove or hereinafter, the first metal tube comprises a first metal alloy and the second metal tube comprises a second metal alloy, wherein the first and second metal alloys may have the same composition or have different alloy compositions. According to one embodiment, the first and second metal alloys have different alloy compositions. According to one embodiment, the first metal tube comprises a first metal alloy and the second metal tube comprises a second metal alloy, wherein the first and second metal alloys have different in the material chemistry which means that the alloying elements comprised therein microstructures, i.e. will interact and form at least one brittle phase in the first butt weld joining the first and second metal tubes, making the first butt weld mechanically weaker than the respective metal tube.

According to one embodiment of the method as defined hereinabove or hereinafter, the first metal alloy may be FeCrAl alloy, thus meaning that said alloy has a chromium content of above 11 wt%, an aluminium content of more than 4 wt% and the balance is Fe. Such an alloy has a ferritic microstructure and will also form a protective layer of aluminum oxide on the surface of an object comprising said alloy. Such an alloy may also contain a large content of molybdenum. The second metal alloy may be a FeNiCr alloy thus meaning that the alloy has a chromium content of above 11 wt%, a nickel content is between 20-60 wt% and the balance is Fe. Such a FeNiCr stainless steel alloy (including iron-base and nickel-base alloys) always has an austenitic microstructure and will form a protective layer of chromium oxide on the surface of objects comprising said alloy.

According to one embodiment of the method as defined hereinabove or hereinafter, the first metal alloy is a stainless steel comprising Fe, Cr, more than 1 wt% Al and less than 0.1 wt% Ni, and the second metal alloy is a stainless steel comprising Fe, Cr, more than 10 wt% Ni and less than 0.5 wt% Al.

According to one embodiment of the method as defined hereinabove or hereinafter, nickel aluminide precipitations, such as Ni₃Al (γ), may be present in the first butt weld or in its near adjacent areas in the first and second metal tubes as a result of the different alloy compositions. According to yet another one embodiment, the first metal alloy contains, in weight%: C up to 0.08, Si up to 0.7, Cr 10-25, Al 1-10, Mo 1.5-5, Mn up to 0.4, balance Fe and normally occurring impurities.

According to one embodiment of the method as defined hereinabove or hereinafter, at least the first outer threading of the first metal tube is subjected to a pre-oxidation treatment before the first metal sleeve part is positioned on the first metal tube and the first metal tube is joined with the second metal tube. Aluminium-containing alloys may be subjected to formation of iron oxide on the surface thereof under conditions such as those occurring in a furnace in which ethylene is produced by means of cracking of hydrocarbons. Since the threading is a particularly sensitive part of the construction, which must not be subjected to catastrophic oxidation, said threading is pre-oxidized such that an alumina layer is formed on the surface thereof which will prevent the formation of iron oxide on said surface.

According to one embodiment, at least the second metal sleeve part may comprise the first metal alloy as defined hereinabove, and the second inner threading of the second sleeve is subjected to a pre-oxidation treatment before being positioned onto the second metal tube. The risk of having iron oxide on the surface of threading of the first metal alloy is even larger when the opposing part, in this case the second metal tube, is made of the above-mentioned second metal alloy. Therefore, in this embodiment, at least the second inner threading of the second metal sleeve part should be subjected to a pre-oxidation treatment. According to one embodiment, each of the above-mentioned inner or outer threading provided on a tube or sleeve part made of the first metal alloy is pre-oxidised.

According to one embodiment, the first sleeve and the second metal sleeve comprise the first metal alloy. According to one embodiment the first and second metal sleeves are made of may have the same alloy composition. Regardless of whether the alloy composition is the same or not, at least the alloying elements comprised therein are such that they do not form brittle phases in a weld when joined by means of welding. Thus the first and second metal sleeves may, as a further alternative, consist of steel having corresponding alloying elements, but with different amounts thereof. According to a further embodiment, the metal alloy of the first and second metal sleeve contains, in weight%: C up to 0.08, Si up to 0.7, Cr 10-25, Al 1-10, Mo 1.5-5, Mn up to 0.4, balance Fe and normally occurring impurities.

The aspect of the disclosure is also achieved by means a tube arrangement, comprising
i. a first metal tube provided with a first outer threading in an end region thereof;
ii. a second metal tube provided with a second outer threading in an end region thereof;
iii. a first butt weld joining said end regions of the first and second metal tubes;
iv. a first metal sleeve part provided with a first inner threading and positioned on said end region of the first metal tube;
v. a second metal sleeve part provided with a second inner threading and positioned on said end region of the second metal tube;
wherein the first inner threading of the first metal sleeve part engages the outer threading of the first metal tube and wherein the second inner threading of the second metal sleeve part engages the outer threading of the second metal tube and wherein the opposed ends of the first metal sleeve part and the second metal sleeve part are joined by a second butt weld and each of the end regions of the first and second metal tubes is provided with a larger outer diameter and a larger wall thickness than an adjacent part of the first and second metal tube associated thereto, wherein the bottom of each threading encircles a circle having a larger diameter than the diameter of said adjacent part of the respective first and second metal tube.

According to one embodiment, there is a space between the second butt weld and the first and second metal tube and between the second butt weld and the first butt weld. This space will prevent the second butt weld from contacting and interacting with the first and second metal tubes or with the first butt weld. Thereby, it is avoided that load which should be carried by the metal sleeves is carried by the first butt weld.

According to one embodiment, a ceramic protection member may be provided in said space, this will prevent the second butt weld from contacting and interacting with the first and second metal tubes and from contacting and interacting with the first butt weld. A physical protection member may be preferred since it reduces the risk of having unintentional contact and interaction between the second butt weld and the metal tubes or between the second butt weld and the first butt weld due to incorrect welding.

According to one embodiment, the first metal tube comprises a first metal alloy and the second metal tube comprises a second metal alloy. According to one embodiment the first metal alloy and the second metal alloy may have different alloy compositions. According to one embodiment, there is at least one brittle phase in the first butt weld joining the first and second metal tubes as a consequence of the first and second metal alloys have different alloy compositions which means that the alloying elements therein will interact due to different material chemistry and form said phase, making the butt weld less strong, i.e. mechanically weaker, than the respective metal tube.

According to one embodiment of the method as defined hereinabove or hereinafter, the first metal alloy may be FeCrAl alloy, thus meaning that said alloy has a chromium content of above 11 wt%, an aluminium content of more than 4 wt% and the balance is Fe. Such an alloy has a ferritic microstructure and will also form a protective layer of aluminum oxide on the surface of an object comprising said alloy. Such an alloy may also contain a large content of molybdenum. The second metal alloy may be a FeNiCr alloy thus meaning that the alloy has a chromium content of above 11 wt%, a nickel content is between 20-60 wt% and the balance is Fe. Such a FeNiCr stainless steel alloy (including iron-base and nickel-base alloys) always has an austenitic microstructure and will form a protective layer of chromium oxide on the surface of objects comprising said alloy. The FeNiCr alloy has an austenitic microstructure.

According to one embodiment of the method as defined hereinabove or hereinafter, the first metal alloy is a stainless steel comprising Fe, Cr, more than 1 wt% Al and less than 0.1 wt% Ni, and the second metal alloy is a stainless steel comprising Fe, Cr, more than 10 wt% Ni and less than 0.5 wt% Al.
When metal tubes of such different materials are welded, nickel aluminides are easily formed in the weld, making it less tough and thereby making it more important to provide a further load-carrying part, which is embodied by the suggested sleeve formed by the joined sleeve parts. According to one embodiment, the first butt weld comprises precipitations of nickel aluminides, and the material of the first butt weld has a lower toughness than the first metal alloy and the second metal alloy.

According to one embodiment, at least the second metal sleeve part may comprise the first metal alloy as defined hereinabove, and the second inner threading of the second sleeve is subjected to a pre-oxidation treatment before being positioned onto the second metal tube. The risk of having iron oxide on the surface of threading of the first metal alloy is even larger when the opposing part, in this case the second metal tube, is made of the above-mentioned second metal alloy. Therefore, in this embodiment, at least the second inner threading of the second metal sleeve part should be subjected to a pre-oxidation treatment. According to one embodiment, each of the above-mentioned inner or outer threading provided on a tube or sleeve part made of the first metal alloy is pre-oxidised.

According to one embodiment, the first sleeve and the second metal sleeve comprise the first metal alloy. According to one embodiment the first and second metal sleeves are made of may have the same alloy composition. Regardless of whether the alloy composition is the same or not, at least the alloying elements comprised therein are such that they do not form brittle phases in a weld when joined by means of welding. Thus the first and second metal sleeves may, as a further alternative, consist of steel having corresponding alloying elements, but with different amounts thereof. According to a further embodiment, the metal alloy of the first and second metal sleeve contains, in weight%: C up to 0.08, Si up to 0.7, Cr 10-25, Al 1-10, Mo 1.5-5, Mn up to 0.4, balance Fe and normally occurring impurities.

The aspect of the present disclosure is also achieved by means of a furnace, presenting a chamber which is provided a burner arrangement for generating heat and in which there is provided a tube arrangement as defined hereinabove or hereinafter for conduction of a hot gas or steam through the furnace.

According to one embodiment, the furnace is a furnace in which ethylene is produced by means of cracking of hydrocarbons conducted by said tube arrangement.

Further features and advantages of the present disclosure will be presented in the following detailed description.

### BRIEF DESCRIPTION OF THE DRAWINGS

Embodiments of the disclosure will now be presented with reference to the annexed drawing, on which:
Fig. 1 is a cross section showing a tube arrangement of the present disclosure,
Fig. 2 is an enlarged view of a detail of the tube arrangement shown in fig. 1,
Fig. 3 is a perspective view of the tube arrangement in a position before joining of the first and second metal tubes thereof by means of welding, and
Fig. 4 is a schematic view of a furnace in which a tube arrangement according to the present disclosure is arranged.

### DETAILED DESCRIPTION OF THE DISCLOSURE

Though the disclosure is applicable to all applications in which an outer sleeve is used for the purpose of supplementing or replacing the load-carrying function of a weld between two metal tubes, the present disclosure will be described with regard to an application in which tubes are used in furnaces for cracking of hydrocarbonaceous feedstock, typically for the production of ethylene. It should thus be understood that the present disclosure is not primarily restricted to such an application.

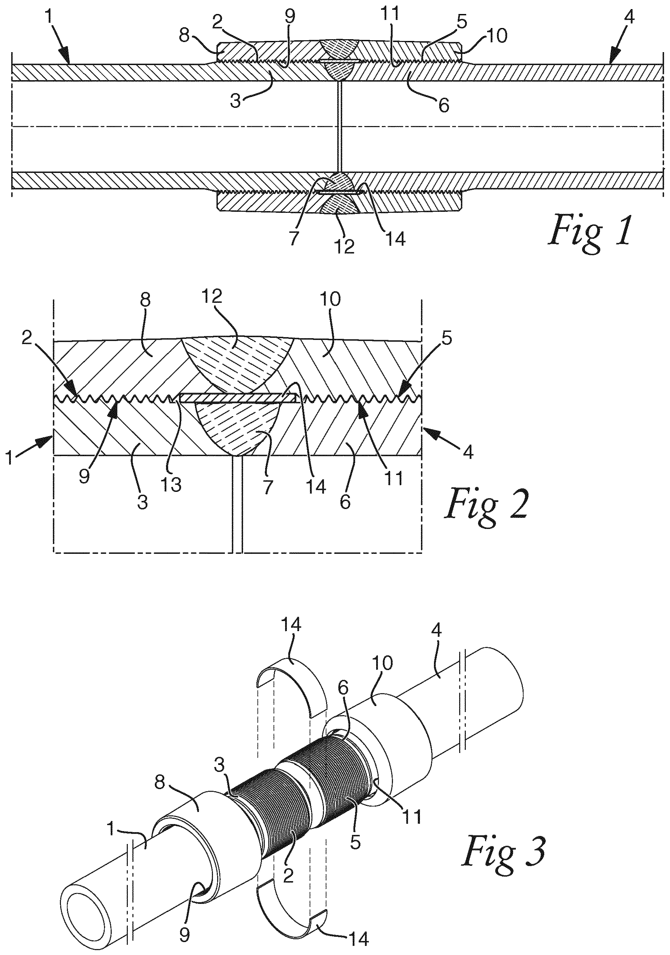

Fig. 1 shows a cross section of a tube arrangement of an embodiment of the present disclosure. The tube arrangement comprises a first metal tube 1 provided with an first outer threading 2 in an end region 3 thereof; a second metal tube 4 provided with a second outer threading 5 in an end region 6 thereof; a butt weld 7 joining said end regions 3, 6 of the first and second metal tubes 1, 4; a first metal sleeve part 8 provided with a first inner threading 9 and positioned on said end region 3 of the first metal tube 1, wherein the first inner threading 9 of the first metal sleeve part 8 engages the first outer threading 2 of the first metal tube 1; a second metal sleeve part 10 provided with a second inner threading 11 and positioned on said end region 6 of the second metal tube 4, wherein the second inner threading 11 of the second metal sleeve part 10 engages the second outer threading 5 of the second metal tube 4, wherein opposed ends of the first metal sleeve part 8 and the second metal sleeve part 10 are joined by a butt weld 12. In the present disclosure, the term sleeve is intended to mean a one piece tubular threaded connection.

Each of the above-mentioned end regions 3, 6 of the first and second metal tubes 1, 4 is provided with a larger outer diameter and a larger wall thickness than an adjacent part of the first and second metal tube 1, 4 associated thereto. The bottom of each threading encircles a circle having a larger diameter than the diameter of said adjacent part of the respective first and second metal tube 1, 4. Accordingly, the inner diameter of the first metal sleeve part 8 is larger than the outer diameter of said adjacent part of the first metal tube 1, and the inner diameter of the second metal sleeve part 10 is larger than the diameter of said adjacent part of the second metal tube 4. The outer diameter of said end region 3 of the first metal tube 1 corresponds to the outer diameter of said end region 6 of the second metal tube 4.

The opposing ends of the first and second metal tubes 1, 4 that are joined by means of the butt weld 7 are bevelled such that the butt weld 7 is U-shaped, or V-shaped, with its wider end directed outwards.

The opposing ends of the first and second metal sleeve parts 8, 10 that are joined by the butt weld 12 are bevelled such that the butt weld 12 is U-shaped, or V-shaped, with its wider end directed outwards.

There is a space 13 between the butt weld of the first and second metal sleeve parts 8, 10 and the first and second metal tube 1, 4 or the butt weld 7 thereof. This space will prevent the butt weld 12 connecting the first and second metal sleeve parts 8, 10 from contacting and interacting with the first and second metal tubes 1, 4 and from contacting and interacting with the butt weld 7 connecting said metal tubes 1, 4. A ceramic protection member 14 is provided in said space 13, preventing the butt weld 12 connecting the first and second metal sleeve parts 8, 10 from contacting and interacting with the first and second metal tubes 1, 4 and the butt weld 7 connecting the latter.

The first metal tube 1 comprises a first metal alloy and the second metal tube 4 comprises a second metal alloy, wherein there is at least one brittle phase in the butt weld 7 joining the first and second metal tubes as a consequence of the first and second metal alloys have different alloy compositions and thereby different material chemistry, the alloying elements comprised therein will interact and form said phase upon welding, thus making the butt weld 7 mechanically weaker than the respective metal tube 1, 4. Here, the first metal alloy FrCrAl alloy, and the second metal alloy is FeCrNi alloy. The above-mentioned brittle phase may thus include nickel aluminides. In the exemplifying embodiment presented here, the first metal alloy contains, in weight%: C up to 0.08, Si up to 0.7, Cr 10-25, Al 1-10, Mo 1.5-5, Mn up to 0.4, balance Fe and normally occurring impurities.

The first and second sleeves 8, 10 are made of steel having the same or at least corresponding chemical composition. In the exemplifying embodiment presented here, the metal alloy of the first and second sleeve is the above-mentioned first metal alloy, which contains, in weight%: C up to 0.08, Si up to 0.7, Cr 10-25, Al 1-10, Mo 1.5-5, Mn up to 0.4, balance Fe and normally occurring impurities.

The second inner threading 11 of the second metal sleeve part 10 presents an alumina layer (not visible on the drawing). The risk of having iron oxide on the surface of threading of the first metal alloy is even larger when the opposing part, in this case the second metal tube 4, is made of the above-mentioned second metal alloy and the second metal sleeve part 10 is formed by the first metal alloy. Therefore, at least the second inner threading 11 of the second metal sleeve part 10 should be subjected to a pre-oxidation treatment and whereby an alumina layer is obtained thereon as a result thereof. In the exemplifying embodiment presented here, the first inner threading 9 of the first metal sleeve part 8 also presents a protecting alumina layer. Also the first outer threading 2 of the first metal tube 1 presents a protective alumina layer.

The tube arrangement presents a gas-tight connection between the first and second metal tubes 1, 4 defined by the butt weld 7 connecting the first and second metal tubes 1, 4, while a sleeve formed by the first and second metal sleeve parts 8, 10 forms a load-carrying part of the tube arrangement, which reduces the mechanical load needed to be adopted by the butt weld 7 connecting the first and second metal tubes 1, 4. According to the exemplifying embodiment, the load-carrying part formed by the first and second metal sleeve parts 8, 10 connected by the butt weld 12 is designed to carry a larger part of mechanical load to which the tube arrangement is subjected than is carried by the butt weld connecting the first and second metal tubes 1,4.

An exemplifying embodiment of the provision of the tube arrangement presented hereinabove comprises the following steps:
- providing an end region 3 of the first metal tube 1 with a first outer threading 2;
- providing an end region 6 of the second metal tube (4) with an second outer threading 5;
- providing a first sleeve part 8 made of metal with a first inner threading (9);
- providing a second sleeve part 10 made of metal with a second inner threading 11;
- positioning the first metal sleeve part 8 on the first metal tube 1 by screwing said first metal sleeve part 8 onto the first outer threading 2 of the first metal tube 1;
- positioning the second sleeve part 10 on the second metal tube 4 by screwing the second metal sleeve part 10 onto the second outer threading 5 of the second metal tube 4;
- moving the ends regions 3, 6 of the first and second metal tubes 1, 4 into contact with each other;
- butt welding together from the outside the end regions 3, 6 of the first and second metal tubes 1, 4;
- bringing together the first and second metal sleeve parts 8, 10 by screwing at least one of said metal sleeve parts 8, 10 on the outer threading 2, 5 of its associated tube 1, 4;
- butt welding together from the outside the opposed ends of the first and second metal sleeve parts 8, 10;

The above-mentioned threading 2, 5, 9, 11 are typically generated by means of machining of the respective component provided therewith.

The butt welding process is suggested to comprise a TIG (tungsten inert gas) - welding process, possibly manual, using the above-mentioned first metal alloy as the filling material. However, other suitable alloys may also be used as filling material. The filling material may be in the form of a strip or a wire.

Before providing said end regions 3, 6 of the first and second metal tubes 1, 4 with said outer threading 2, 5, the metal tubes 1, 4 are subjected to a treatment by means of which the end region 3, 6 thereof is provided with a larger outer diameter and a larger wall thickness than an adjacent part corresponding metal tube 1, 4. This treatment comprises a forging step, also referred to as upsetting.

Before joining by butt welding the opposed ends of the first and second metal sleeve parts 8, 10, the ceramic protection member 14 is positioned between the first and second metal sleeve parts 8, 10 and the first and second metal tubes 1, 4 at a position in which it will prevent the butt weld 12 of the first and second metal sleeve parts 8, 10 from contacting and interacting with the first and second metal tubes 1, 4 and the butt weld 7 connecting them.

The second inner threading 11 of the second metal sleeve part 10 is subjected to a pre-oxidation treatment before the second metal sleeve part 10 is positioned on the second metal tube and the second metal tube 4 is joined with the first metal tube 1. The pre-oxidation treatment comprises heating the second metal sleeve part 10 to a temperature of approximately 1100°C for a period of approximately 8 hours.

In the exemplifying embodiment presented here, also the first inner threading 9 of the first metal sleeve part 8 and the first outer threading 2 of the first metal tube 1 are provided with a alumina layer by means of a corresponding heat treatment.

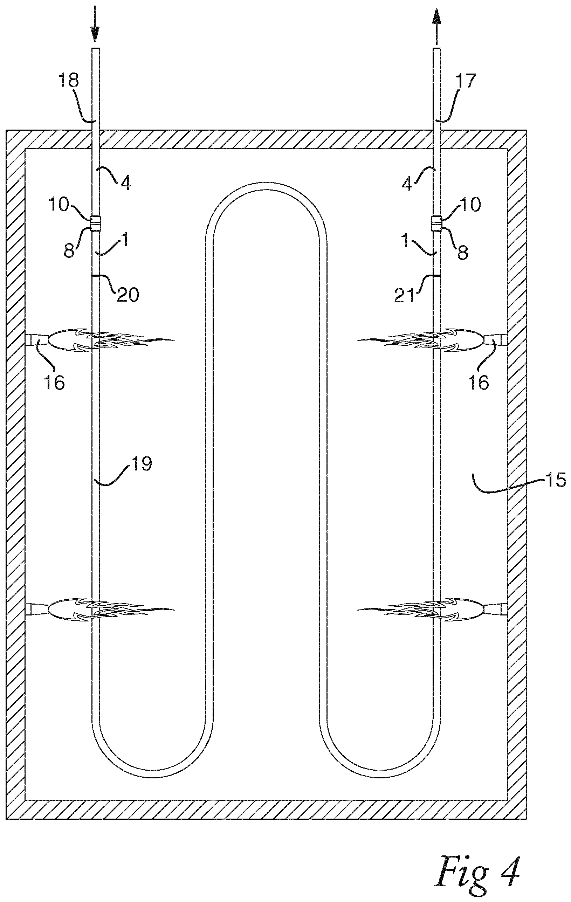

Fig. 4 shows a furnace, presenting a chamber 15 in which a burner arrangement 16 is provided for generating heat and in which a tube arrangement as defined hereinabove is provided for conduction of a hot gas or steam through the furnace. In this specific embodiment, the furnace is a furnace in which ethylene is produced by means of cracking of hydrocarbons conducted by said tube arrangement.

Inside the chamber 15 of the furnace, tubing 19 to which the tube arrangement is connected (here by butt welds 20, 21) is formed by a tubing 19. It is suggested that the above-mentioned first metal alloy is used as the material of said tubing 19. At the region of an outlet 17 of the chamber 15, inside the chamber 15, the above-defined tube arrangement is provided, wherein the second metal tube 4 of the tube arrangement extends out of said chamber 15 through said outlet 17. At an inlet 18 of the chamber 15, inside the chamber 15, another tube arrangement as defined hereinabove is arranged. The second metal tube 4 of this tube arrangement extends out of the chamber through the inlet 18.

## Claims

1. A method of producing a tube arrangement, in which a first tube (1) is joined with a second tube (4), said tubes (1, 4) being metal tubes, wherein said method comprises the following steps:
a) providing an end region (3) of the first metal tube (1) with a first outer threading (2);
b) providing an end region (6) of the second metal tube (4) with an second outer threading (5);
c) providing a first sleeve part (8) made of metal with a first inner threading (9);
d) providing a second sleeve part (10) made of metal with a second inner threading (11);
e) positioning the first metal sleeve part (8) on the first metal tube (1) by screwing said first metal sleeve part (8) onto the first outer threading (2) of the first metal tube (1);
f) positioning the second metal sleeve part (10) on the second metal tube (4) by screwing the second metal sleeve part (10) onto the second outer threading (5) of the second metal tube (4);
g) moving the ends regions (3, 6) of the first and second metal tubes (1, 4) into contact with each other;
h) butt welding together from the outside the end regions (3, 6) of the first and second metal tubes (1, 4);
i) bringing together the first and second metal sleeve parts (8, 10) by screwing at least one of said metal sleeve parts (8, 10) on the outer threading (2, 5) of its associated tube (1, 4);
j) butt welding together from the outside the opposed ends of the first and second metal sleeve parts (8, 10);
wherein in step g) the first and second metal sleeve parts (8, 10) are positioned such that a joint between the first and second metal tubes (1, 4) is accessible from outside, wherein the first and second metal sleeve parts are separated from each other in the axial direction of the first and second metal tubes, thereby exposing between them, the joint between the first and the second metal tubes and making said joint accessible from outside, and wherein before step a) or before step f), at least one of the first and second metal tubes (1, 4) is subjected to a treatment whereby said end region (3, 6) is provided with a larger outer diameter and a larger wall thickness than an adjacent part of the corresponding tube (1, 4).

2. The method according to claim 1, wherein said treatment contains forging of said end region (3, 6) such that said end region (3, 6) is provided with a larger outer diameter and a larger wall thickness than an adjacent part of the corresponding tube (1,4).

3. The method according to any one of claims 1 to 2, wherein between steps g) and h), a protection member (14) is positioned between the first and second metal sleeve parts (8, 10) and the first and second metal tubes (1, 4), wherein the protection member (14) separates the second butt weld (12) from the first and second metal tubes (1, 4) and from the first butt weld (7).

4. The method according to claim 3, wherein the protection member (14) is a ceramic.

5. The method according to any one of claims 1 to 4, wherein the first metal tube (1) comprises a first metal alloy and the second metal tube (4) comprises a second metal alloy, wherein the first and second metal alloys have different alloy compositions.

6. The method according to claim 5, wherein the first metal alloy is a ferritic steel comprising Fe, Cr and Al, and the second metal alloy is an austenitic steel comprising Fe, Cr and Ni.

7. The method according to any one of claims 1 to 6, wherein the first metal sleeve part (8) and the second metal sleeve part (10) have the same alloy composition.

8. A tube arrangement, comprising
i. a first metal tube (1) provided with a first outer threading (2) in an end region (3) thereof;
ii. a second metal tube (4) provided with a second outer threading (5) in an end region (6) thereof;
iii. a first butt weld (7) joining said end regions (3, 6) of the first and second metal tubes (1, 4);
iv. a first metal sleeve part (8) provided with a first inner threading (9) and positioned on said end region (3) of the first metal tube (1);
v. a second metal sleeve part (10) provided with a second inner threading (11) and positioned on said end region (6) of the second metal tube (4);
wherein the inner threading (9) of the first metal sleeve part (8) engages the outer threading (2) of the first metal tube (1) and wherein the second inner threading (11) of the second metal sleeve part (10) engages the outer threading (5) of the second metal tube (4) and wherein the opposed ends of the first metal sleeve part (8) and the second metal sleeve part (10) are joined by a second butt weld (12), and
**characterised in that** each of the end regions (3, 6) of the first and second metal tubes (1, 4) is provided with a larger outer diameter and a larger wall thickness than an adjacent part of the first and second metal tube (1, 4) associated thereto, wherein the bottom of each threading encircles a circle having a larger diameter than the diameter of said adjacent part of the respective first and second metal tube (1, 4).

9. The tube arrangement according to claim 8, wherein there is a space (13) between the second butt weld (12) and the first and second metal tubes (1, 4) and between the second butt weld (12) and the first butt weld (7).

10. The tube arrangement according to claim 9, wherein the tube arrangement is provided with a ceramic protection member (14) in said space (13).

11. The tube arrangement according to anyone of claims 8 to 10, wherein the first metal tube (1) comprises a first metal alloy and the second metal tube (4) comprises a second metal alloy and wherein the first metal alloy and the second metal alloy are of different alloy compositions.

12. The tube arrangement according to any one of claims 8 to 11, wherein the first metal sleeve part (8) and the second metal sleeve part (10) have the same alloy composition.

13. A furnace, presenting a chamber (15) in which there is provided a burner arrangement (16) for generating heat and in which there is provided a tube arrangement according to any one of claims 8-12 for conduction of a hot gas or steam through the furnace.

14. The furnace according to claim 13, wherein the furnace is a furnace in which ethylene is produced by means of cracking of hydrocarbons conducted by said tube arrangement.

## Patentansprüche

1. Verfahren zur Herstellung einer Rohranordnung, in dem ein erstes Rohr (1) mit einem zweiten Rohr (4) verbunden wird, wobei diese Rohre (1, 4) Metallrohre sind, wobei dieses Verfahren die folgenden Schritte umfasst:
a) Bereitstellen eines Endbereichs (3) des ersten Metallrohrs (1) mit einem ersten äußeren Gewinde (2);
b) Bereitstellen eines Endbereichs (6) des zweiten Metallrohrs (4) mit einem zweiten äußeren Gewinde (5);
c) Bereitstellen eines ersten Manschettenteils (8), hergestellt aus Metall, mit einem ersten inneren Gewinde (9);
d) Bereitstellen eines zweiten Manschettenteils (10), hergestellt aus Metall, mit einem zweiten inneren Gewinde (11);
e) Positionieren des ersten Metallmanschettenteils (8) auf dem ersten Metallrohr (1) durch Schrauben dieses ersten Metallmanschettenteils (8) auf das erste äußere Gewinde (2) des ersten Metallrohrs (1);
f) Positionieren des zweiten Metallmanschettenteils (10) auf dem zweiten Metallrohr (4) durch Schrauben des zweiten Metallmanschettenteils (10) auf das zweite äußere Gewinde (5) des zweiten Metallrohrs (4);
g) Bewegen der Endbereiche (3, 6) des ersten und zweiten Metallrohrs (1, 4) in einen Kontakt miteinander;
h) Stumpfverschweißen der Endbereiche (3, 6) des ersten und zweiten Metallrohrs (1, 4) von außen;
i) Zusammenfügen des ersten und zweiten Metallmanschettenteils (8, 10) durch Schrauben zumindest eines dieser Metallmanschettenteile (8, 10) auf das äußere Gewinde (2, 5) des damit verbundenen Rohrs (1, 4);
j) Stumpfverschweißen der gegenüberliegenden Enden des ersten und zweiten Metallmanschettenteils (8, 10) von außen;
wobei in Schritt g) das erste und zweite Metallmanschettenteil (8, 10) so positioniert werden, dass eine Verbindung zwischen dem ersten und zweiten Metallrohr (1, 4) von außen zugänglich ist, wobei das erste und das zweite Metallmanschettenteil voneinander in der axialen Richtung des ersten und zweiten Metallrohrs getrennt sind, wodurch zwischen ihnen die Verbindung zwischen dem ersten und zweiten Metallrohr freigelegt wird und diese Verbindung von außen zugänglich gemacht wird und wobei vor Schritt a) oder vor Schritt f) zumindest eines aus dem ersten und zweiten Metallrohr (1, 4) einer Behandlung unterzogen wird, durch die dieser Endbereich (3, 6) mit einem größeren Außendurchmesser und einer größeren Wanddicke versehen wird als ein angrenzender Teil des entsprechenden Rohrs (1, 4).

2. Verfahren nach Anspruch 1, wobei diese Behandlung ein Schmieden dieses Endbereichs (3, 6) beinhaltet, sodass dieser Endbereich (3, 6) mit einem größeren Außendurchmesser und einer größeren Wanddicke versehen wird als ein angrenzender Teil des entsprechenden Rohrs (1, 4).

3. Verfahren nach einem der Ansprüche 1 bis 2, wobei zwischen den Schritten g) und h) ein Schutzelement (14) zwischen dem ersten und zweiten Metallmanschettenteil (8, 10) und dem ersten und zweiten Metallrohr (1, 4) positioniert wird, wobei das Schutzelement (14) die zweite Stumpfschweißung (12) von dem ersten und zweiten Metallrohr (1, 4) und von der ersten Stumpfschweißung (7) trennt.

4. Verfahren nach Anspruch 3, wobei das Schutzelement (14) ein Keramikteil ist.

5. Verfahren nach einem der Ansprüche 1 bis 4, wobei das erste Metallrohr (1) eine erste Metalllegierung umfasst und das zweite Metallrohr (4) eine zweite Metalllegierung umfasst, wobei die erste und zweite Metalllegierung verschiedene Legierungszusammensetzungen besitzen.

6. Verfahren nach Anspruch 5, wobei die erste Metalllegierung ein ferritischer Stahl ist, der Fe, Cr und Al umfasst und die zweite Metalllegierung ein austenitischer Stahl ist, der Fe, Cr und Ni umfasst.

7. Verfahren nach einem der Ansprüche 1 bis 6, wobei der erste Metallmanschettenteil (8) und der zweite Metallmanschettenteil (10) dieselbe Legierungszusammensetzung besitzen.

8. Rohranordnung, umfassend:
i. ein erstes Metallrohr (1), das mit einem ersten äußeren Gewinde (2) in einem Endbereich (3) desselben versehen ist;
ii. ein zweites Metallrohr (4), das mit einem zweiten äußeren Gewinde (5) in einem Endbereich (6) desselben versehen ist;
iii. eine erste Stumpfschweißung (7), die diese Endbereiche (3, 6) des ersten und zweiten Metallrohrs (1, 4) miteinander verbindet;
iv. einen ersten Metallmanschettenteil (8), der mit einem ersten inneren Gewinde (9) versehen ist und auf diesem Endbereich (3) des ersten Metallrohrs (1) positioniert wird;
v. einen zweiten Metallmanschettenteil (10), der mit einem zweiten inneren Gewinde (11) versehen ist und auf diesem Endbereich (6) des zweiten Metallrohrs (4) positioniert wird;
wobei das innere Gewinde (9) des ersten Metallmanschettenteils (8) in das äußere Gewinde (2) des ersten Metallrohrs (1) eingreift und wobei das zweite innere Gewinde (11) des zweiten Metallmanschettenteils (10) in das äußere Gewinde (5) des zweiten Metallrohrs (4) eingreift und wobei die gegenüberliegenden Enden des ersten Metallmanschettenteils (8) und des zweiten Metallmanschettenteils (10) durch eine zweite Stumpfschweißung (12) miteinander verbunden sind, und
**dadurch gekennzeichnet, dass** jeder der Endbereiche (3, 6) des ersten und zweiten Metallrohrs (1, 4) mit einem größeren Außendurchmesser und einer größeren Wanddicke versehen ist als ein anliegender Teil des damit verbundenen ersten und zweiten Metallrohrs (1, 4), wobei die Unterseite jedes Gewindes einen Kreis umgibt, der einen größeren Durchmesser besitzt als der Durchmesser dieses anliegenden Teils des jeweiligen ersten und zweiten Metallrohrs (1, 4).

9. Rohranordnung nach Anspruch 8, wobei ein Zwischenraum (13) zwischen der zweiten Stumpfschweißung (12) und dem ersten und zweiten Metallrohr (1, 4) und zwischen der zweiten Stumpfschweißung (12) und der ersten Stumpfschweißung (7) besteht.

10. Rohranordnung nach Anspruch 9, wobei die Rohranordnung mit einem Keramik-Schutzelement (14) in diesem Zwischenraum (13) versehen ist.

11. Rohranordnung nach einem der Ansprüche 8 bis 10, wobei das erste Metallrohr (1) eine erste Metalllegierung umfasst und das zweite Metallrohr (4) eine zweite Metalllegierung umfasst und wobei die erste Metalllegierung und die zweite Metalllegierung verschiedene Legierungszusammensetzungen besitzen.

12. Rohranordnung nach einem der Ansprüche 8 bis 11, wobei der erste Metallmanschettenteil (8) und der zweite Metallmanschettenteil (10) dieselbe Legierungszusammensetzung besitzen.

13. Ofen, der eine Kammer (15) aufweist, in der eine Brenneranordnung (16) zum Erzeugen von Wärme bereitgestellt wird und in der eine Rohranordnung gemäß einem der Ansprüche 8 - 12 zum Leiten eines heißen Gases oder von Dampf durch den Ofen bereitgestellt wird.

14. Ofen nach Anspruch 13, wobei der Ofen ein Ofen ist, in dem durch Cracken von durch diese Rohranordnung geleiteten Kohlenwasserstoffen Ethylen hergestellt wird.

## Revendications

1. Procédé de fabrication d'un agencement de tube, dans lequel un premier tube (1) est associé à un deuxième tube (4), lesdits tubes (1, 4) étant des tubes métalliques, dans lequel ledit procédé comprend les étapes suivantes :
a) la fourniture d'une région d'extrémité (3) du premier tube métallique (1) avec un premier filetage extérieur (2) ;
b) la fourniture d'une région d'extrémité (6) du deuxième tube métallique (4) avec un deuxième filetage extérieur (5) ;
c) la fourniture d'une première partie de manchon (8) faite de métal avec un premier filetage intérieur (9) ;
d) la fourniture d'une deuxième partie de manchon (10) faite de métal avec un deuxième filetage intérieur (11) ;
e) le positionnement de la première partie de manchon métallique (8) sur le premier tube métallique (1) par le vissage de ladite première partie de manchon métallique (8) sur le premier filetage extérieur (2) du premier tube métallique (1) ;
f) le positionnement de la deuxième partie de manchon métallique (10) sur le deuxième tube métallique (4) par le vissage de la deuxième partie de manchon métallique (10) sur le deuxième filetage extérieur (5) du deuxième tube métallique (4) ;
g) le déplacement des régions d'extrémités (3, 6) des premier et deuxième tubes métalliques (1, 4) en contact les unes avec les autres ;
h) la soudure bout à bout ensemble depuis l'extérieur des régions d'extrémité (3, 6) des premier et deuxième tubes métalliques (1, 4) ;
i) l'assemblage des première et deuxième parties de manchon métalliques (8, 10) par le vissage d'au moins une des dites parties de manchon métalliques (8, 10) sur le filetage extérieur (2, 5) de son tube associé (1, 4) ;
j) la soudure bout à bout ensemble depuis l'extérieur des extrémités opposées des première et deuxième parties de manchon métalliques (8, 10) ;
dans lequel, à l'étape g) les première et deuxième parties de manchon métalliques (8, 10) sont positionnées de telle sorte qu'un joint entre le premier et le deuxième tube métallique (1, 4) est accessible depuis l'extérieur, dans lequel les première et deuxième parties de manchon métalliques sont séparées l'une de l'autre dans la direction axiale du premier et du deuxième tubes métalliques, exposant ainsi entre elles le joint entre les premier et deuxième tubes métalliques et rendant ledit joint accessible depuis l'extérieur, et dans lequel avant l'étape a) ou avant l'étape f), au moins un des premier et deuxième tubes métalliques (1, 4) est sujet à un traitement par lequel ladite région d'extrémité (3, 6) est dotée d'un diamètre extérieur plus grand et d'une épaisseur de paroi supérieure à celle d'une partie adjacente du tube correspondant (1, 4).

2. Procédé selon la revendication 1, dans lequel ledit traitement contient un forgeage de ladite région d'extrémité (3, 6) de telle sorte que ladite région d'extrémité (3, 6) est dotée d'un diamètre extérieur plus grand et une épaisseur de paroi plus grande qu'une partie adjacente du tube correspondant (1, 4).

3. Procédé selon l'une quelconque des revendications 1 à 2, dans lequel entre les étapes g) et h), un élément de protection (14) est positionné entre les première et deuxième parties de manchon métalliques (8, 10) et les premier et deuxième tubes métalliques (1, 4), dans lequel l'élément de protection (14) sépare la deuxième soudure bout à bout (12) des premier et deuxième tubes métalliques (1, 4) et de la première soudure bout à bout (7).

4. Procédé selon la revendication 3, dans lequel l'élément de protection (14) est une céramique.

5. Procédé selon l'une quelconque des revendications 1 à 4, dans lequel le premier tube métallique (1) comprend un premier alliage métallique et le deuxième tube métallique (4) comprend un deuxième alliage métallique, dans lequel les premier et deuxième alliages métalliques ont des compositions d'alliage différentes.

6. Procédé selon la revendication 5, dans lequel le premier alliage métallique est un acier ferritique comprenant Fe, Cr et Al, et le deuxième alliage métallique est un acier austénitique comprenant Fe, Cr et Ni.

7. Procédé selon l'une quelconque des revendications 1 à 6, dans lequel la première partie de manchon métallique (8) et la deuxième partie de manchon métallique (10) ont la même composition d'alliage.

8. Un agencement de tube, comprenant
i. un premier tube métallique (1) doté d'un premier filetage extérieur (2) dans une région d'extrémité (3) de celui-ci ;
ii. un deuxième tube métallique (4) doté d'un deuxième filetage extérieur (5) dans une région d'extrémité (6) de celui-ci ;
iii. une première soudure bout à bout (7) joignant lesdites régions d'extrémité (3, 6) des premier et deuxième tubes métalliques (1, 4) ;
iv. une première partie de manchon métallique (8) dotée d'un premier filetage intérieur (9) et positionnée sur ladite région d'extrémité (3) du premier tube métallique (1) ;
v. une deuxième partie de manchon métallique (10) dotée d'un deuxième filetage intérieur (11) et positionné sur ladite région d'extrémité (6) du deuxième tube métallique (4) ;
dans lequel le filetage intérieur (9) de la première partie de manchon métallique (8) engage le filetage extérieur (2) du premier tube métallique (1) et dans lequel le deuxième filetage intérieur (11) de la deuxième partie de manchon métallique (10) engage le filetage extérieur (5) du deuxième tube métallique (4) et dans lequel les extrémités opposées de la première partie de manchon métallique (8) et la deuxième partie de manchon métallique (10) sont jointes par une deuxième soudure bout à bout (12), et
**caractérisé en ce que** chacune des régions d'extrémité (3, 6) des premier et deuxième tubes métalliques (1, 4) est dotée d'un diamètre extérieur plus grand et d'une épaisseur de paroi plus grande qu'une partie adjacente des premier et deuxième tubes métalliques (1, 4) qui y sont associées, dans lequel le fond de chaque filetage entoure un cercle ayant un diamètre plus grand que le diamètre de ladite partie adjacente des premier et deuxième tubes métalliques respectifs (1, 4).

9. Agencement de tube selon la revendication 8, dans lequel il existe un espace (13) entre la deuxième soudure bout à bout (12) et les premier et deuxième tubes métalliques (1, 4) et entre la deuxième soudure bout à bout (12) et la première soudure bout à bout (7).

10. Agencement de tube selon la revendication 9, dans lequel l'agencement de tube est doté d'un élément de protection céramique (14) dans ledit espace (13).

11. Agencement de tube selon l'une quelconque des revendications 8 à 10, dans lequel le premier tube métallique (1) comprend un premier alliage métallique et le deuxième tube métallique (4) comprend un deuxième alliage métallique et dans lequel le premier alliage métallique et le deuxième alliage métallique sont des compositions d'alliage différentes.

12. Agencement de tube selon l'une quelconque des revendications 8 à 11, dans lequel la première partie de manchon métallique (8) et la deuxième partie de manchon métallique (10) ont la même composition d'alliage.

13. Un four, présentant une chambre (15) dans laquelle est fourni un agencement de brûleur (16) pour la génération de chaleur et dans lequel est fourni un agencement de tube selon l'une quelconque des revendications 8-12 pour une conduction d'un gaz chaud ou de vapeur à travers le four.

14. Four selon la revendication 13, dans lequel le four est un four dans lequel l'éthylène est produit au moyen de fissures d'hydrocarbures conduites par ledit agencement de tube.
